(19) Europäisches Patentamt
European Patent Office
Office européen des brevets

(11) **EP 2 743 151 B1**

(12) **EUROPÄISCHE PATENTSCHRIFT**

(45) Veröffentlichungstag und Bekanntmachung des Hinweises auf die Patenterteilung:
**27.04.2016 Patentblatt 2016/17**

(51) Int Cl.:
**B60W 30/18** *(2012.01)*    **B60L 7/18** *(2006.01)*

(21) Anmeldenummer: **13189294.5**

(22) Anmeldetag: **18.10.2013**

(54) **Steuervorrichtung für ein rekuperatives Bremssystem eines Fahrzeugs und Verfahren zum Betreiben eines rekuperativen Bremssystems eines Fahrzeugs**

Control device for a recuperative brake system of a vehicle and method for operating a recuperative brake system of a vehicle

Dispositif de commande pour un système de freinage récupératif d'un véhicule et procédé de fonctionnement d'un système de freinage récupératif d'un véhicule

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **11.12.2012 DE 102012222729**
**01.02.2013 DE 102013201679**

(43) Veröffentlichungstag der Anmeldung:
**18.06.2014 Patentblatt 2014/25**

(73) Patentinhaber: **ROBERT BOSCH GMBH**
**70442 Stuttgart (DE)**

(72) Erfinder:
• **Vollert, Herbert**
**71665 Vaihingen/Enz (DE)**
• **Heinemann, Holger**
**71711 Steinheim (DE)**
• **Foitzik, Bertram**
**74360 Ilsfeld (DE)**
• **Kolarsky, Jens**
**74321 Bietigheim/Bissingen (DE)**

(56) Entgegenhaltungen:
**EP-A1- 2 514 645    FR-A1- 2 974 342**

EP 2 743 151 B1

**Beschreibung**

Die Erfindung betrifft eine Steuervorrichtung für ein rekuperatives Bremssystem eines Fahrzeugs. Ebenso betrifft die Erfindung ein Bremssystem für ein Fahrzeug. Des Weiteren betrifft die Erfindung ein Verfahren zum Betreiben eines rekuperativen Bremssystems eines Fahrzeugs.

Stand der Technik

In der DE 10 2010 040 854 A1 sind ein hydraulisches Bremssystem und ein Verfahren zu dessen Betrieb beschrieben. Mittels einer Nutzung des hydraulischen Bremssystems oder eines Ausführens des Verfahrens zu dessen Betrieb soll es möglich sein, ein Fahrzeug mittels mindestens eines Elektromotors und einem hydraulischen Bremssystem abzubremsen.

In der FR 2 974 342 A1 (RENAULT SA [FR]) 26. Oktober 2012 (2012-10-26) sind ein hydraulisches Bremssystem und ein Verfahren zu dessen Betrieb beschreiben. Offenbarung der Erfindung Die Erfindung schafft eine Steuervorrichtung für ein rekuperatives Bremssystem eines Fahrzeugs mit den Merkmalen des Anspruchs 1, ein Bremssystem für ein Fahrzeug mit den Merkmalen des Anspruchs 6 und ein Verfahren zum Betreiben eines rekuperativen Bremssystems eines Fahrzeugs mit den Merkmalen des Anspruchs 7.

Vorteile der Erfindung

Mittels der vorliegenden Erfindung können Toleranzen des rekuperativen Bremssystems, insbesondere Toleranzen der mindestens einen weiteren Reibbremsanlage, wie beispielsweise einer hydraulischen Bremsanlage oder einer pneumatischen Bremsanlage, so kompensiert werden, dass die Funktionsweise des rekuperativen Bremssystems verbessert ist. Kompensierbare Toleranzen sind beispielsweise Lüftspiele, Reibwertschwankungen, Temperatureffekte und/oder ein Verschleiß der mindestens einen weiteren Bremsanlage. Somit kann die vorliegende Erfindung dazu genutzt werden, eine vorteilhafte Funktionsfähigkeit des rekuperativen Bremssystems für eine vergleichsweise lange Lebensdauer von diesen sicherzustellen.

Insbesondere eine hydraulische Bremsanlage verändert sich während ihrer Betriebsdauer. Beispielsweise können sich die Reibwerte zwischen Bremsbelag und Bremsscheibe signifikant ändern. Ebenso kann sich die Druck-Volumen-Charakteristik, d.h. die Volumenaufnahme der hydraulischen Bremsanlage in Abhängigkeit von einem aufgebrachten Bremsdruck, verändern. Die hier aufgezählten Ursachen für ein verändertes Verhalten der hydraulischen Bremsanlage sind modellmäßig nur unzureichend beschreibbar. Deshalb ist es in der Regel nicht möglich, bei einer eingeschränkten Funktionsfähigkeit der hydraulischen Bremsanlage die Ursache dafür zu benennen. Mittels der vorliegenden Erfindung kann jedoch auf eine Ursachenermittlung bezüglich einer eingeschränkten Funktionsfähigkeit des rekuperativen Bremssystems verzichtet werden. Stattdessen ist es ausreichend, durch das Neufestlegen des Wichtungsfaktors die Toleranzen zu kompensieren. (Der Wichtungsfaktor ist dazu auf einen positiven Wert kleiner-gleich 1 festlegbar.)

Die Erfindung ist somit in der Lage, auftretenden Verzögerungsschwankungen durch das Neufestlegen des Wichtungsfaktors, insbesondere durch eine schrittweise Anpassung des Wichtungsfaktors, zu minimieren. Der Fahrer hat somit trotz der Veränderungen an der Charakteristik des rekuperativen Bremssystems weiterhin einen vorteilhaften Bremskomfort. Außerdem kann die vorliegende Erfindung einen Werkstattbesuch zur Behebung von auftretenden Verzögerungsschwankungen überflüssig machen.

In einer vorteilhaften Ausführungsform ist die Ansteuereinrichtung zusätzlich dazu ausgelegt, ein Minimum aus dem Soll-Gesamt-Bremsmoment und einem bereitgestellten oder aus einer bereitgestellten Information ermittelten maximal ausführbaren Kann-Motor-Bremsmoment zu ermitteln, und das Soll-Motor-Bremsmoment als Produkt des Minimums und des Wichtungsfaktors festzulegen. Bei einem nächsten rekuperativen Bremsvorgang mit Bremsmomentverblendung sorgt der neu festgelegte Wichtungsfaktor in diesem Fall zu einer Anpassung des Motor-Bremsmoments an das Reib-Bremsmoment. Man kann dies auch so umschreiben, dass das Motor-Bremsmoment entsprechend einer toleranzbedingten Verschiebung des Reib-Bremsmoments gesenkt oder gesteigert wird. Die Funktionsweise des Elektromotors passt sich somit an das toleranzbedingte abweichende Verhalten der weiteren Reibbremsanlage an. Als Alternative kann die Ansteuereinrichtung auch dazu ausgelegt sein, das Soll-Motor-Bremsmoment als Produkt des Soll-Gesamt-Bremsmoments und des Wichtungsfaktors festzulegen.

Außerdem kann die Ansteuereinrichtung zusätzlich dazu ausgelegt sein, das Soll-Reib-Bremsmoment, sofern das maximal ausführbare Kann-Motor-Bremsmoment größer als das Soll-Gesamt-Bremsmoment ist, gleich Null, und, sofern das maximal ausführbare Kann-Motor-Bremsmoment kleiner als das Soll-Gesamt-Bremsmoment ist, als Differenz des Soll-Motor-Bremsmoments von dem Soll-Gesamt-Bremsmoment festzulegen. Das maximal ausführbare Kann-Motor-Bremsmoment ist in der Regel abhängig von einer Geschwindigkeit des Fahrzeugs und eines Ladezustands einer mittels des mindestens einen Elektromotors aufladbaren Batterie. Das Kann-Motor-Bremsmoment ändert sich somit während einer Bremsung. Mittels der Steuervorrichtung kann jedoch das Soll-Reib-Bremsmoment so festgelegt werden, dass ein Variieren des maximal ausführbaren Kann-Motor-Bremsmoments ausgleichbar ist. Der Fahrer bemerkt somit keine Auswirkungen des Variierens des maximal ausführbaren Kann-Motor-Bremsmoments während einer Bremsung.

In einer weiteren vorteilhaften Ausführungsform ist die Ansteuereinrichtung zusätzlich dazu ausgelegt, eine Abweichung der Ist-Gesamt-Bremsmomentänderung von der Soll-Gesamt-Bremsmomentänderung zu ermitteln, und, sofern die Abweichung ungleich Null ist, den Wichtungsfaktor um ein Produkt aus der ermittelten Abweichung und einem vorgegebenen Glättungsfaktor zu ändern. Auf diese Weise ist verhinderbar, dass ein einmaliges Abweichen der Ist-Gesamt-Bremsmomentänderung von der Soll-Gesamt-Bremsmomentänderung, beispielsweise aufgrund einer Fahrbahnneigung, den nachfolgenden rekuperativen Bremsvorgang signifikant beeinträchtigt.

Vorteilhafter Weise ist mindestens eine Hydraulikkomponente der hydraulisch ausgebildeten Reibbremsanlage mittels des mindestens einen Reibbremse-Steuersignals ansteuerbar. Die vorliegende Erfindung lässt sich somit insbesondere für einen Bremsentyp nutzen, bei welchem häufig Veränderungen der Charakteristik auftreten. Somit kann die vorliegende Erfindung dazu genutzt werden, die herkömmlichen Nachteile einer hydraulischen Bremsanlage zu beheben.

Die oben aufgezählten Vorteile sind auch bei einem Bremssystem für ein Fahrzeug mit einer derartigen Steuervorrichtung gewährleistet.

Des Weiteren sind die oben beschriebenen Vorteile realisierbar durch ein Ausführen eines korrespondierenden Verfahrens zum Betreiben eines rekuperativen Bremssystems eines Fahrzeugs. Das Verfahren ist entsprechend den Ausführungsformen der Steuervorrichtung weiterbildbar.

Kurze Beschreibung der Zeichnungen

Weitere Merkmale und Vorteile der vorliegenden Erfindung werden nachfolgend anhand der Figuren erläutert. Es zeigen:

Fig. 1          ein Flussdiagramm zum Erläutern einer ersten Ausführungsform des Verfahrens;

Fig. 2a bis 2d          Signaldarstellungen zum Erläutern einer zweiten Ausführungsform des Verfahrens;

Fig. 3          eine schematische Darstellung einer ersten Ausführungsform der Steuervorrichtung; und

Fig. 4          eine schematische Darstellung einer zweiten Ausführungsform der Steuervorrichtung.

Ausführungsformen der Erfindung

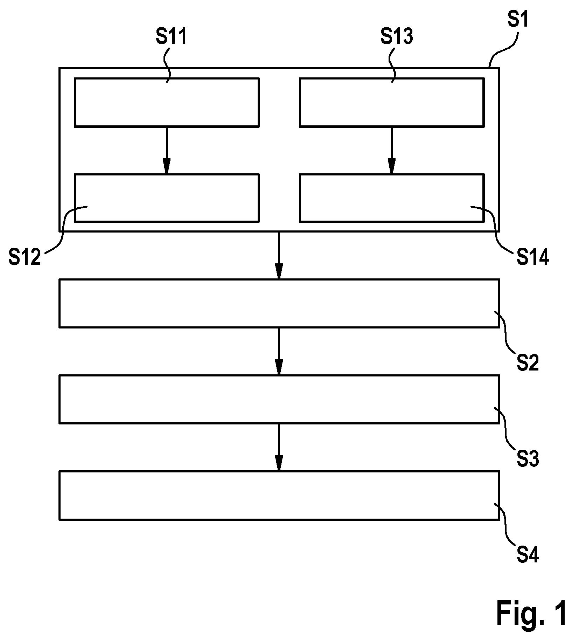

Fig. 1 zeigt ein Flussdiagramm zum Erläutern einer ersten Ausführungsform des Verfahrens.

In einem Verfahrensschritt S1 werden mindestens ein Elektromotor des rekuperativen Bremssystems entsprechend einem festgelegten Soll-Motor-Bremsmoment und mindestens eine weitere Reibbremsanlage des rekuperativen Bremssystems entsprechend einem festgelegten Soll-Reib-Bremsmoment zumindest zum Verlangsamen des Fahrzeugs während einer Abbremszeit angesteuert. Dazu werden das Soll-Motor-Bremsmoment und das Soll-Reib-Bremsmoment zumindest unter Berücksichtigung eines vorgegebenen Soll-Gesamt-Bremsmoments während der Abbremszeit mehrmals festgelegt. Das Soll-Gesamt-Bremsmoment kann z.B. von einem Fahrer mittels einer Betätigung eines Bremsbetätigungselements des Fahrzeugs vorgegeben werden. Insbesondere ein Bremsbetätigungsweg, wie beispielsweise ein Pedalweg, und/oder eine Fahrerbremskraft können (als dem Soll-Gesamt-Bremsmoment entsprechende Größen) bei der Festlegung des Soll-Motor-Bremsmoments und/oder des Soll-Reib-Bremsmoments in dem Verfahrensschritt S1 berücksichtigt werden. Ebenso kann das Soll-Gesamt-Bremsmoment von einer Steuerautomatik des Fahrzeugs, wie z.B. einer Geschwindigkeits-Steuerautomatik des Fahrzeugs, vorgeben sein. Es wird darauf hingewiesen, dass das Soll-Gesamt-Bremsmoment während der Abbremszeit variieren kann. Das Soll-Motor-Bremsmoment und das Soll-Reib-Bremsmoment können während des Verfahrensschritts S1 fortlaufend zumindest an Änderungen des Soll-Gesamt-Bremsmoments angepasst werden.

Außerdem erfolgt das Festlegen des Soll-Motor-Bremsmoments während der Abbremszeit unter zusätzlicher Berücksichtigung eines vorgegebenen Wichtungsfaktors. Wie unten genauer beschrieben wird, kann durch die Berücksichtigung des vorgegebenen Wichtungsfaktors in dem Verfahrensschritt S1 die Funktionsweise des mindestens einen Elektromotors so angepasst werden, dass Toleranzen in der mindestens einen weiteren Reibbremsanlage ausgeglichen werden. Man kann dies auch so umschreiben, dass die Funktionsweise des mindestens einen Elektromotors hinsichtlich der Toleranzen in der mindestens einen weiteren Reibbremsanlage mittels der zusätzlichen Berücksichtigung des Wichtungsfaktors beim Festlegen des Soll-Motor-Bremsmoments optimiert wird. (Auch auf die Festlegung des Wichtungsfaktors wird unten noch eingegangen. Sofern der Verfahrensschritt S1 zum ersten Mal ausgeführt wird, kann mit einem Wichtungsfaktor gleich 1 gestartet werden.)

In einer vorteilhaften Ausführungsform des Verfahrens umfasst der Verfahrensschritt S1 die Unterschritte S11 bis S14. In dem Unterschritt S11 wird das Soll-Motor-Bremsmoment festgelegt, indem ein Minimum aus dem Soll-Gesamt-Bremsmoment und einem bereitgestellten oder ermittelten maximal ausführbaren Kann-Motor-Bremsmoment bestimmt und anschließend das Soll-Motor-Bremsmoment als Produkt des Minimums und des Wichtungsfaktors vorgegeben wird. Solange das vom Fahrer oder der Geschwindigkeits-Steuerautomatik angeforderte Soll-Gesamt-Bremsmoment allein mittels des mindestens einen Elektromotors ausübbar ist, wird bei dem hier beschriebenen Verfahren somit rein generatorisch gebremst. Zum Ermitteln des mittels des mindestens einen Elektromotors maximal ausführbaren Kann-Motor-Bremsmoments können eine aktuelle Geschwindigkeit des Fahrzeugs und/oder ein Ladezustand einer mittels des mindestens einen Elektromotors aufladbaren Batterie ermittelt und ausgewertet werden.

Anschließend kann in dem Unterschritt S12 ein mittels des mindestens einen Elektromotors ausgeführtes Ist-Motor-Bremsmoment gleich dem (neu) festgelegten Soll-Motor-Bremsmoment eingesteuert werden.

Vorzugsweise wird in dem Unterschritt S13 das Soll-Reib-Bremsmoment, sofern das maximal ausführbare Kann-Motor-Bremsmoment größer als das Soll-Gesamt-Bremsmoment ist, gleich Null, und, sofern das maximal ausführbare Kann-Motor-Bremsmoment kleiner als das Soll-Gesamt-Bremsmoment ist, als Differenz des Soll-Motor-Bremsmoments von dem Soll-Gesamt-Bremsmoment festgelegt. Die mindestens eine weitere Reibbremsanlage wird somit nur dazu genutzt, eine entfallende Einsetzbarkeit des mindestens einen Elektromotors zum Abbremsen des Fahrzeugs zu kompensieren. Das Ausführen des hier beschriebenen Verfahrens reduziert damit den Energieverbrauch und die Schadstoffemission während einer Fahrt des Fahrzeugs.

In einem weiteren Unterschritt S14 kann ein mittels der mindestens einen weiteren Reibbremsanlage ausgeführtes Ist-Reib-Bremsmoment gleich dem (neu) festgelegten Soll-Reib-Bremsmoment eingesteuert werden. Beispielsweise kann dazu eine hydraulisch ausgelegte weitere Reibbremsanlage mit mindestens einem Radbremszylinder oder eine pneumatische Reibbremsanlage angesteuert werden. Die Ausführbarkeit des Verfahrens ist jedoch nicht auf eine bestimmte Ausbildung der mindestens einen weiteren Reibbremsanlage limitiert.

In einem weiteren Verfahrensschritt S2 wird eine während der Abbremszeit aufgetretene Soll-Gesamt-Bremsmomentänderung unter Berücksichtigung des von dem Fahrer und/oder der Geschwindigkeits-Steuerautomatik während der Abbremszeit vorgegebenen Soll-Gesamt-Bremsmoments ermittelt. Außerdem wird in einem Verfahrensschritt S3 eine während der Abbremszeit aufgetretene Ist-Gesamt-Bremsmomentänderung mittels mindestens eines Geschwindigkeitssensors und/oder mindestens eines Verzögerungssensors bestimmt. Beispielsweise wird zum Bestimmen der Ist-Gesamt-Bremsmomentänderung ein Gradient/eine zeitliche Änderung einer mittels des mindestens einen Geschwindigkeitssensors bestimmten Änderung ermittelt. Die Verfahrensschritte S2 und S3 können in beliebiger Reihenfolge oder gleichzeitig ausgeführt werden.

In einem nachfolgenden Verfahrensschritt S4 wird, zumindest sofern während der Abbremszeit das Soll-Motor-Bremsmoment reduziert und das Soll-Reib-Bremsmoment gesteigert werden, der Wichtungsfaktor nach der Abbremszeit unter Berücksichtigung eines Vergleichs der Soll-Gesamt-Bremsmomentänderung mit der Ist-Gesamt-Bremsmomentänderung neufestgelegt. Vorzugsweise wird in dem Verfahrensschritt S4 eine Abweichung der Ist-Gesamt-Bremsmomentänderung von der Soll-Gesamt-Bremsmomentänderung ermittelt. Beispielsweise kann der Wichtungsfaktor geändert werden, sofern die Abweichung ungleich Null ist. Alternativ kann der Wichtungsfaktor auch geändert werden, sofern die Abweichung über einer vorgegebenen Mindest-Abweichung liegt.

Bevorzugter Weise wird der Wichtungsfaktor um ein Produkt aus der ermittelten Abweichung und einem vorgegebenen Glättungsfaktor geändert. Durch die Verwendung des Glättungsfaktors bei der Neufestlegung des Wichtungsfaktors kann verhindert werden, dass ein einmaliges Abweichen der Ist-Gesamt-Bremsmomentänderung von der Soll-Gesamt-Bremsmomentänderung, beispielsweise wegen einer starken Fahrbahnneigung, einen während der nächsten Bremsung zu berücksichtigenden signifikant geänderten Wichtungsfaktor bewirkt. Vorzugsweise wird der Wichtungsfaktor nur mit einem zu parametrisierenden Anteil von Bremsung zu Bremsung angepasst. Bevorzugt wird ein Glättungsfaktor zwischen 0,1 bis 0,5.

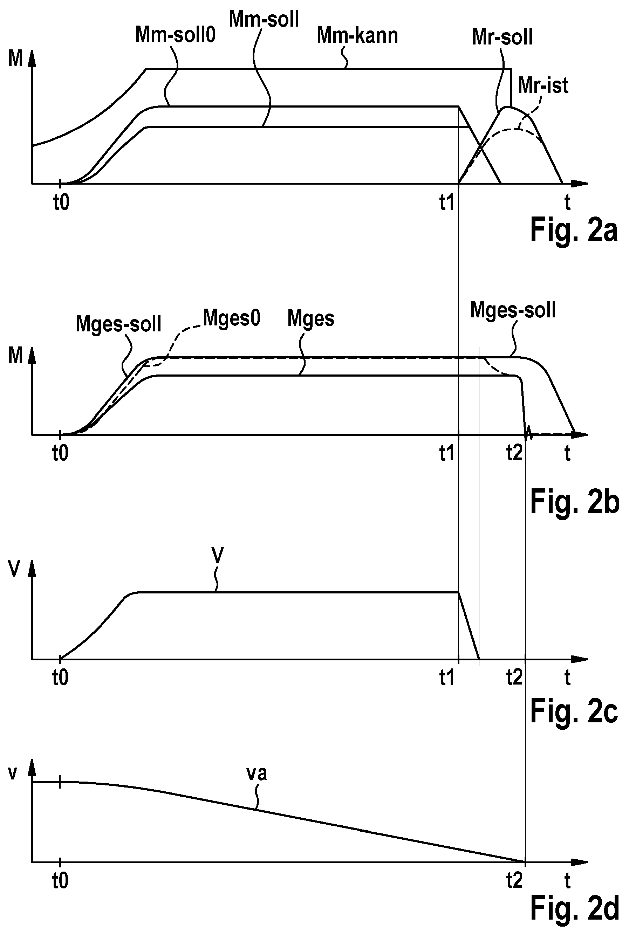

Das hier beschriebene Verfahren verhindert während eines Verblendens eines zeitlich abnehmenden Ist-Motor-Bremsmoments einen herkömmlicher Weise häufig auftretenden Abfall des Gesamt-Bremsmoments. Zum besseren Verständnis der Vorteile des hier beschriebenen Verfahrens wird auf die Ausführungen zu den Fig. 2a bis 2d verwiesen.

Fig. 2a bis 2d zeigen Signaldarstellungen zum Erläutern einer zweiten Ausführungsform des Verfahrens.

Das im Weiteren beschriebene Verfahren wird zum Betreiben eines rekuperativen Bremssystems eines Fahrzeugs mit mindestens einem (generatorisch betreibbaren) Elektromotor und einer hydraulisch ausgelegten weiteren Reibbremsanlage mit mindestens einem Radbremszylinder ausgeführt. Es wird darauf hingewiesen, dass die Ausführbarkeit des Verfahrens jedoch nicht auf eine bestimmte Ausbildung der mindestens einen weiteren Reibbremsanlage limitiert ist. Ebenso ist die Ausführbarkeit des Verfahrens nicht auf einen bestimmten Typ des mindestens einen Elektromotors beschränkt.

Die Abszissen der Signaldarstellungen der Fig. 2a bis 2d sind die Zeitachse t. Die Ordinaten der Signaldarstellungen der Fig. 2a und 2b geben Bremsmomente M an. Mittels der Ordinate der Signaldarstellung der Fig. 2c ist ein Speichervolumen V einer in mindestens einer aktiven Speicherkammer der hydraulisch ausgelegten weiteren Reibbremsanlage zwischengespeicherten Bremsflüssigkeit angegeben. Ein Verlauf der Geschwindigkeit va des Fahrzeugs während des Ausführens des hier beschriebenen Verfahrens ist mittels der Ordinate der Signaldarstellung der Fig. 2d angezeigt.

Ab einer Zeit t0 wird ein Soll-Gesamt-Bremsmoment Mges-soll ungleich Null vom Fahrer oder von der Geschwindigkeits-Steuerautomatik angefordert. (Vor der Zeit t0 ist das Soll-Gesamt-Bremsmoment Mges-soll gleich Null.)

Bis zu der Zeit t1 ist das angeforderte Soll-Gesamt-Bremsmoment Mges-soll in der Regel kleiner als ein mittels des mindestens einen Elektromotors maximal ausführbares Kann-Motor-Bremsmoment Mm-kann. Das Fahrzeug wird deshalb zwischen den Zeiten t0 und t1 rein generatorisch abgebremst. Das zwischen den Zeiten t0 und t1 mittels des mindestens einen Elektromotors auszuführende Soll-Motor-Bremsmoment Mm-soll wird als Produkt aus dem Soll-Gesamt-Bremsmoment Mges-soll und einem vorgegebenen Wichtungsfaktor kleiner 1 festgelegt. Das Fahrzeug wird somit zwischen den Zeiten t0 und t1 mit einem Ist-Gesamt-Bremsmoment Mges gleich dem Soll-Motor-Bremsmoment Mm-soll abgebremst. (Zum Vergleich sind in die Fig. 2a und 2b auch ein "herkömmliches" Soll-Motor-Bremsmoment Mm-soll0 mit einem Wichtungsfaktor gleich 1 und ein daraus resultierendes "herkömmliches" Ist-Gesamt-Bremsmoment Mges0 eingezeichnet.)

Während des rein generatorischen Bremsens zwischen den Zeiten t0 und t1 bleibt das Soll-Reib-Bremsmoment Mr-soll gleich 0. Um dem Fahrer dennoch ein standardgemäßes Bremsbetätigungsgefühl (Pedalgefühl) zu garantieren, kann das Speichervolumen V aus der angebundenen hydraulischen Reibbremsanlage in die mindestens eine aktive Speicherkammer verschoben werden. Das hier beschriebene Verfahren ist somit mit bekannten Vorgehensweisen zum Verblenden des Volumens der hydraulischen Reibbremsanlage während eines generatorischen Betreibens des mindestens einen Elektromotors kombinierbar. Auf diese Weise ist eine von dem Betrieb des mindestens einen Elektromotors unabhängige Charakteristik des Bremsbetätigungselements (Pedalcharakteristik) realisierbar.

Ab der Zeit t1 wird das maximal ausführbare Kann-Motor-Bremsmoment Mm-kann kleiner als das angeforderte Soll-Gesamt-Bremsmoment Mges-soll. Um dennoch ein verlässliches Einhalten des angeforderten Soll-Gesamt-Bremsmoments Mges-soll zu gewährleisten, wird ab der Zeit t1 ein Soll-Reib-Bremsmoment Mr-soll ungleich 0 vorgegeben. Ein dem Soll-Reib-Bremsmoment Mr-soll entsprechendes Ist-Reib-Bremsmoment Mr-ist kann mittels eines Verschiebens von Bremsflüssigkeit aus der mindestens einen aktiven Speicherkammer aufgebaut werden. Auf diese Weise kann das Fahrzeug weiterhin so lange abgebremst werden, bis es zum Zeitpunkt t2 eine Geschwindigkeit gleich 0 hat.

Allerdings können Toleranzen innerhalb der hydraulisch ausgelegten weiteren Reibbremsanlage dazu führen, dass das in der mindestens einen aktiven Speicherkammer zwischengespeicherte Speichervolumen V zum Aufbauen eines dem Soll-Reib-Bremsmoment Mr-soll entsprechenden Bremsdruck nicht ausreicht. Insbesondere Alterungseffekte führen häufig zu einer geänderten Druck-Volumen-Charakteristik eines hydraulischen Bremssystems. Anstelle des vorgegebenen Soll-Reib-Bremsmoments Mr-soll wird damit nur ein niedrigeres Ist-Reib-Bremsmoment Mr-ist erzielt.

Das "herkömmliche" Ist-Gesamt-Bremsmoment Mges0, welches aus dem "herkömmlichen" Soll-Motor-Bremsmoment Mm-soll0 mit einem Wichtungsfaktor gleich 1 resultiert, weist deshalb zwischen den Zeiten t1 und t2 einen als Unterbremsen bezeichenbaren Abfall auf. Ein plötzliches Unterbremsen während eines Bremsvorgangs führt jedoch zu einer für den Fahrer unerwarteten Bremswegverlängerung, und wird deshalb von diesem als besonders unkomfortabel empfunden.

Demgegenüber gewährleistet das hier beschriebene Verfahren das Ist-Gesamt-Bremsmoment Mges, welches kein Unterbremsen zwischen den Zeiten t1 und t2 aufweist. Durch die Berücksichtigung des Wichtungsfaktors bei der Festlegung des Soll-Motor-Bremsmoments Mm-soll ist das vor der Zeit t1 ausgeführte Ist-Gesamt-Bremsmoment Mges bereits an die Abweichungen des Ist-Reib-Bremsmoments Mr-ist von dem Soll-Reib-Bremsmoment Mr-soll angepasst. Außerdem kann durch die Festlegung des Soll-Reib-Bremsmoments Mr-soll als Differenz des Soll-Motor-Bremsmoments Mm-soll (welches kleiner als das "herkömmliche" Soll-Motor-Bremsmoment Mm-soll0 ist) von dem Soll-Gesamt-Bremsmoment Mges-soll das Ist-Reib-Bremsmoment Mr-ist höher eingesteuert werden. Da das Soll-Motor-Bremsmoment Mm-soll in diesem Fall in seiner Höhe dem später ausgeübten Ist-Reib-Bremsmoment Mr-ist (nahezu) entspricht, nimmt der Fahrer ab der Zeit t1 keinen plötzlichen Abfall des Ist-Gesamt-Bremsmoments Mges wahr. Bei einem Ausführen des hier beschriebenen Verfahrens ist damit sichergestellt, dass der Fahrer trotz der toleranzbedingten Abweichung des Ist-Reib-Bremsmoments Mr-ist von dem Soll-Reib-Bremsmoment Mr-soll nicht irritiert wird.

Das hier beschriebene Verfahren nutzt somit die (nahezu) unveränderlichen Eigenschaften des mindestens einen Elektromotors während seiner gesamten Betriebszeit/Lebensdauer. Auch nach einem längeren Einsetzen des mindestens einen Elektromotors zum Abbremsen des Fahrzeugs ist das damit ausgeführte Ist-Motor-Bremsmoment noch (nahezu) gleich einem angeforderten Soll-Motor-Bremsmoment Mm-soll. (Das während eines Verblendvorgangs ausgeführte Ist-Motor-Bremsmoment kann verlässlich auf Basis einer toleranzbehafteten Phasenstrommessung und/oder eines toleranzbehafteten Modells des mindestens einen Elektromotors ermittelt werden.)

Das stark toleranzbehaftete Verhalten der hydraulisch ausgebildeten weiteren Reibbremsanlage wird mittels der angepassten Funktionsweise des mindestens einen Elektromotors kompensiert. Ein plötzliches Unterbremsen während eines Bremsvorgangs kann mittels eines Wichtungsfaktors kleiner 1 verhindert werden.

Sofern der Fahrer bei einem Wichtungsfaktor kleiner 1 das aufgrund des reduzierten Soll-Motor-Bremsmoments Mm-soll resultierende Ist-Gesamt-Bremsmoment Mges als nicht ausreichend ansieht, hat er frühzeitig die Möglichkeit, das angeforderte Soll-Gesamt-Bremsmoment Mges-soll zu steigern.

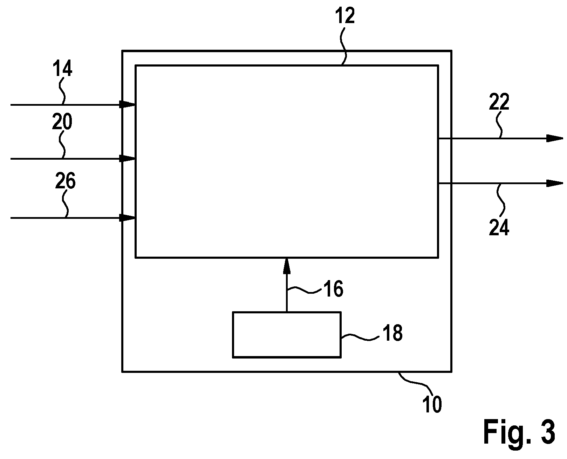

Fig. 3 zeigt eine schematische Darstellung einer ersten Ausführungsform der Steuervorrichtung.

Die in Fig. 3 schematisch dargestellte Steuervorrichtung 10 ist für ein rekuperatives Bremssystem eines Fahrzeugs verwendbar. Die Steuervorrichtung 10 kann beispielsweise in einer Steuerelektronik des rekuperativen Bremssystems integriert sein. Durch die Integrierbarkeit der Steuervorrichtung 10 in mindestens eine weitere elektronische Komponente können die Kosten und ein Bauraumbedarf der Steuervorrichtung 10 reduziert werden.

Die Steuerelektronik 10 umfasst eine Ansteuereinrichtung 12, mittels welcher mindestens ein (nicht skizzierter) Elektromotor des rekuperativen Bremssystems und mindestens eine (nicht dargestellte) weitere Reibbremsanlage des rekuperativen Bremssystems ansteuerbar sind. Vorzugsweise ist auf diese Weise das Fahrzeug während einer Abbremszeit zumindest verlangsambar.

Ein mittels des mindestens einen Elektromotors auszuübendes Soll-Motor-Bremsmoment und ein mittels der mindestens einen weiteren Reibbremsanlage auszuübendes Soll-Reib-Bremsmoment sind zumindest unter Berücksichtigung eines Vorgabesignals 14 mittels der Ansteuereinrichtung 12 während der Abbremszeit mehrmals festlegbar. Das Vorgabesignal 14 umfasst mindestens eine Vorgabegröße bezüglich eines von einem Fahrer mittels einer Betätigung eines Bremsbetätigungselements des Fahrzeugs und/oder von einer Steuerautomatik des Fahrzeugs, wie insbesondere einer Geschwindigkeits-Steuerautomatik des Fahrzeugs, vorgebbaren Soll-Gesamt-Bremsmoments. Das Vorgabesignal 14 kann beispielsweise der Ansteuereinrichtung 12 einen Bremsbetätigungsweg (Pedalweg) und/oder eine Fahrerbremskraft mitteilen. Insbesondere kann das Vorgabesignal 14 von einem (nicht dargestellten) Stangensensor an die Ansteuereinrichtung 12 ausgegeben werden.

Die Ansteuereinrichtung 12 ist zusätzlich dazu ausgelegt, das Soll-Motor-Bremsmoment während der Abbremszeit unter zusätzlicher Berücksichtigung eines vorgegebenen Wichtungsfaktors 16 festzulegen. Der Wichtungsfaktor 16 kann z.B. von einer Speichereinheit 18 an die Ansteuereinrichtung 12 bereitgestellt werden. Insbesondere kann die Ansteuereinrichtung 12 dazu ausgelegt sein, ein Minimum aus dem Soll-Gesamt-Bremsmoment und einem bereitgestellten oder aus einer bereitgestellten Information ermittelten maximal ausführbaren Kann-Motor-Bremsmoment 20 zu bestimmen, und das Soll-Motor-Bremsmoment als Produkt des Minimums und des Wichtungsfaktors 16 festzulegen. Mindestens ein dem festgelegten Soll-Motor-Bremsmoment entsprechendes Motor-Steuersignal 22 ist während der Abbremszeit mehrmals an den mindestens einen Elektromotor ausgebbar.

Vorzugsweise ist die Ansteuereinrichtung auch dazu ausgelegt, das Soll-Reib-Bremsmoment, sofern das maximal ausführbare Kann-Motor-Bremsmoment 20 größer als das Soll-Gesamt-Bremsmoment ist, gleich Null, und, sofern das maximal ausführbare Kann-Motor-Bremsmoment 20 kleiner als das Soll-Gesamt-Bremsmoment ist, als Differenz des Soll-Motor-Bremsmoments von dem Soll-Gesamt-Bremsmoment festzulegen. Damit ist mindestens ein dem festgelegten Soll-Reib-Bremsmoment entsprechendes Reibbremse-Steuersignal 24 während der Abbremszeit mehrmals an die mindestens eine Reibbremsanlage ausgebbar. Beispielsweise kann mindestens eine Hydraulikkomponente der hydraulisch ausgebildeten weiteren Reibbremsanlage mittels des mindestens einen Reibbremse-Steuersignals 24 ansteuerbar sein.

Mittels der Ansteuereinrichtung 12 ist auch eine während der Abbremszeit aufgetretene Soll-Gesamt-Bremsmomentänderung unter Berücksichtigung des Vorgabesignals 14 ermittelbar oder mittels eines bereitgestellten ersten Datensignals (nicht skizziert) empfangbar. Ebenso ist mittels der Ansteuereinrichtung 12 eine während der Abbremszeit aufgetretene Ist-Gesamt-Bremsmomentänderung unter Berücksichtigung mindestens eines bereitgestellten Sensorsignals 26 mindestens eines Geschwindigkeitssensors und/oder mindestens eines Verzögerungssensors ermittelbar oder mittels eines bereitgestellten zweiten Datensignals (nicht dargestellt) empfangbar. Insbesondere kann als Sensorsignal 26 eine Geschwindigkeit des Fahrzeugs bereitgestellt werden, aus welcher ein Gradient/eine zeitliche Änderung herleitbar ist. Das erste Datensignal und/oder das zweite Datensignal können von einer Untereinheit der Steuervorrichtung 10 oder von einer externen Sensor- und Auswerteelektronik ausgegeben werden.

Zumindest sofern während der Abbremszeit das Soll-Motor-Bremsmoment reduziert und das Soll-Reib-Bremsmoment gesteigert wird, ist die Ansteuereinrichtung 12 dazu ausgelegt, den Wichtungsfaktor 16 nach der Abbremszeit unter Berücksichtigung eines Vergleichs der Soll-Gesamt-Bremsmomentänderung mit der Ist-Gesamt-Bremsmomentänderung neufestzulegen. Beispielsweise wird dazu eine Abweichung der Ist-Gesamt-Bremsmomentänderung von der Soll-Gesamt-Bremsmomentänderung ermittelt. Sofern die Abweichung ungleich Null ist (bzw. sofern die Abweichung über einer Mindest-Abweichung liegt) kann der Wichtungsfaktor 16 um ein Produkt aus der ermittelten Abweichung und einen vorgegebenen Glättungsfaktor geändert werden. Der neu festgelegte Wichtungsfaktor kann anschließend auf der Speichereinheit 18 abgespeichert werden.

Die Steuervorrichtung 10 gewährleistet damit die oben schon erläuterten Vorteile.

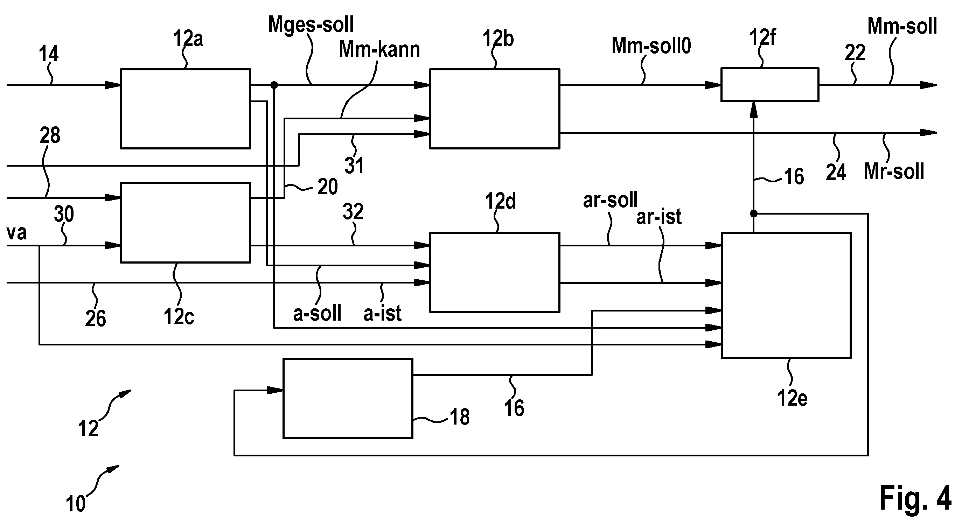

Fig. 4 zeigt eine schematische Darstellung einer zweiten Ausführungsform der Steuervorrichtung.

Bei der Ausführungsform der Fig. 4 ist eine erste Auswerteeinheit 12a der Ansteuereinrichtung 12 der Steuervorrichtung 10 dazu ausgelegt, unter Berücksichtigung des Vorgabesignals 14 ein Soll-Gesamt-Bremsmoment Mges-soll festzulegen und an eine zweite Auswerteeinheit 12b der Ansteuereinrichtung 12 auszugeben. Mittels der zweiten Auswerteeinheit 12b sind ein vorläufiges Soll-Motor-Bremsmoment Mm-soll0 und das Soll-Reib-Bremsmoment Mr-soll festlegbar.

Vorzugsweise erfolgt das Festlegen der Bremsmomente Mm-soll0 und Mr-soll unter Berücksichtigung zumindest eines mit dem mindestens einen Elektromotor maximal ausführbaren Kann-Motor-Bremsmoments Mm-kann. Das maximal ausführbare Kann-Motor-Bremsmoment Mm-kann kann von der Ansteuereinrichtung 12 aus mindestens einer bereitgestellten Information 28 und 30 vermittelt werden. Beispielsweise kann dazu eine erste Information 28 bezüglich eines Ladezustands einer mittels des mindestens einen Elektromotors aufladbaren Batterie und eine zweite Information 30 bezüglich einer aktuellen Geschwindigkeit va des Fahrzeugs mit der Steuervorrichtung 10 an eine dritte Auswerteeinheit 12c bereitgestellt werden, mittels welcher das maximal ausführbare Kann-Motor-Bremsmoment Mm-kann festlegbar ist. In einer alternativen Ausführungsform kann das Kann-Motor-Bremsmoment M-Kann auch von einer externen Einheit an die Ansteuereinrichtung 12 bereitgestellt werden.

Optionaler Weise kann die zweite Auswerteeinheit 12b zusätzlich zu dem maximal ausführbaren Kann-Motor-Bremsmoment Mm-kann noch ein weiteres Signal 31 bezüglich der aktuellen Funktionsweise des mindestens einen Elektromotors, wie beispielsweise ein Signal 31 mit dem aktuell ausgeübten Motor-Bremsmoment des mindestens einen Elektromotors, bei der Festlegung der Bremsmomente Mm-soll0 und Mr-soll berücksichtigen.

Vorteilhafter Weise ist bei der Steuervorrichtung der Fig. 4 die zweite Auswerteeinheit 12b dazu ausgelegt, ein Minimum aus dem Soll-Gesamt-Bremsmoment Mges-soll und dem maximal ausführbaren Kann-Motor-Bremsmoment Mm-kann als vorläufiges Soll-Motor-Bremsmoment Mm-soll0 zu ermitteln. Dies gewährleistet eine hohe Rekuperationseffizienz bei der Verwendung der Steuervorrichtung 10. Somit kann die Batterie mittels des mindestens einen Elektromotors vergleichsweise schnell aufgeladen werden. Außerdem gewährleistet die Steuervorrichtung 10 eine hohe Energieeinsparung und eine niedrige Schadstoffemission während einer Fahrt des damit ausgestatteten Fahrzeugs.

Die Ansteuereinrichtung 12 umfasst auch eine vierte Auswerteeinheit 12d, an welche die erste Auswerteeinheit 12a eine unter Berücksichtigung des Vorgabesignals 14 hergeleitete Soll-Gesamt-Bremsmomentänderung a-soll bereitstellt. Außerdem ist mittels der vierten Auswerteeinheit 12d auch eine Ist-Gesamt-Bremsmomentänderung a-ist empfangbar. Die Ist-Gesamt-Bremsmomentänderung a-ist kann beispielsweise von mindestens einem (nicht dargestellten) Geschwindigkeitssensor und/oder mindestens einem (nicht skizzierten) Verzögerungssensor an die Ansteuereinrichtung 12 ausgegeben werden. Die vierte Auswerteeinheit 12d erhält von der dritten Auswerteeinheit 12c auch ein Startsignal 32, dessen Empfang sie zur Ermittlung einer relativen Soll-Gesamt-Bremsmomentänderung ar-soll und einer relativen Ist-Gesamt-Bremsmomentänderung ar-ist unter Berücksichtigung der fortlaufend bereitgestellten Größen a-soll und a-ist anregt. Das Startsignal 32 kann an die vierte Auswerteeinheit 12d ausgegeben werden, sobald der Fahrer oder die Geschwindigkeits-Steuerautomatik den Bremswunsch mitteilen. Beispielsweise wird das Startsignal 32 ausgegeben, sobald ein Pedalwegänderungsgradient einen vorgegebenen Schwellwert überschreitet. Alternativ kann das Startsignal 32 auch unmittelbar vor dem Beginn eines Verblendvorgangs an die vierte Auswerteeinheit 12d bereitgestellt werden.

Die relativen Gesamt-Bremsmomentänderungen ar-soll und ar-ist können entsprechend der Gleichungen (GI 1) und (GI 2) ermittelt werden mit:

$$(GI\ 1)\quad ar\text{-soll} = a\text{-soll(te)}/a\text{-soll(ti)};$$

und

$$(GI\ 2)\quad ar\text{-ist} = a\text{-ist(te)}/a\text{-ist(ti)},$$

wobei ti der Zeitpunkt beim Empfangen des Startsignals 32 und te der Zeitpunkt der Beendung des Bremsvorgangs sind. (Erfolgt keine wesentliche Modulation am Bremsbetätigungselement, so ist die relative Soll-Gesamt-Bremsmomentänderung ar-soll ungefähr gleich 1. Trotzdem können aufgrund der Toleranzen der mindestens einen weiteren Reibbremsanlage Variationen der relativen Ist-Gesamt-Bremsmomentänderung ar-ist auftreten.)

Die relativen Gesamt-Bremsmomentänderungen ar-soll und ar-ist werden nach dem Beenden des Bremsvorgangs an eine fünfte Auswerteeinheit 12e bereitgestellt. Die fünfte Auswerteeinheit 12e ist dazu ausgelegt, einen Wichtungsfaktor 16 nach der Abbremszeit unter Berücksichtigung eines Vergleichs der relativen Soll-Gesamt-Bremsmomentänderung ar-soll mit der relativen Ist-Gesamt-Bremsmomentänderung ar-ist neu festzulegen. Dies kann unter Verwendung des oben schon erwähnten Glättungsfaktors und dem von einer Speichereinheit 18 vorherigen Wichtungsfaktor 16 erfolgen.

Der neu festgelegte Wichtungsfaktor 16 wird von der fünften Auswerteeinheit 12e an eine sechste Auswerteeinheit 12f ausgegeben. Die sechste Auswerteeinheit 12f berechnet anschließend das Soll-Motor-Bremsmoment Mm-soll als Produkt des vorläufigen Soll-Motor-Bremsmoments Mm-soll0 und des Wichtungsfaktors 16. Das Soll-Motor-Bremsmoment Mm-soll und das Soll-Reib-Bremsmoment Mr-soll werden anschließend als Steuersignale 22 und 24 ausgegeben.

Die Vorteile der oben ausgeführten Steuervorrichtungen 10 sind auch bei einem damit ausgestattet Bremssystems für ein Fahrzeug gewährleistet.

## Patentansprüche

1. Steuervorrichtung (10) für ein rekuperatives Bremssystem eines Fahrzeugs mit:

einer Ansteuereinrichtung (12), mittels welcher mindestens ein Elektromotor des rekuperativen Bremssystems und mindestens eine weitere Reibbremsanlage des rekuperativen Bremssystems ansteuerbar sind, so dass das Fahrzeug während einer Abbremszeit zumindest verlangsambar ist, wobei ein mittels des mindestens einen Elektromotors auszuübendes Soll-Motor-Bremsmoment (Mm-soll) und ein mittels der mindestens einen weiteren Reibbremsanlage auszuübendes Soll-Reib-Bremsmoment (Mr-soll) zumindest unter Berücksichtigung eines Vorgabesignals (14) bezüglich eines von einem Fahrer mittels einer Betätigung eines Bremsbetätigungselements des Fahrzeugs und/oder von einer Geschwindigkeits-Steuerautomatik des Fahrzeugs vorgebbaren Soll-Gesamt-Bremsmoments (Mgessoll) während der Abbremszeit mehrmals festlegbar sind, und mindestens ein dem festgelegten Soll-Motor-Bremsmoment (Mm-soll) entsprechendes Motor-Steuersignal (22) an den mindestens einen Elektromotor und mindestens ein dem festgelegten Soll-Reib-Bremsmoment (Mr-soll) entsprechendes Reibbremse-Steuersignal (24) an die mindestens eine Reibbremsanlage während der Abbremszeit mehrmals ausgebbar sind;
wobei die Ansteuereinrichtung (12) zusätzlich dazu ausgelegt ist,
das Soll-Motor-Bremsmoment (Mm-soll) während der Abbremszeit unter zusätzlicher Berücksichtigung eines vorgegebenen Wichtungsfaktors (16) festzulegen;

**dadurch gekennzeichnet, dass**
die Ansteuereinrichtung (12) zusätzlich dazu ausgelegt ist:

eine während der Abbremszeit aufgetretene Soll-Gesamt-Bremsmomentänderung (a-soll) unter Berücksichtigung des Vorgabesignals (14) zu ermitteln oder mittels eines bereitgestellten ersten Datensignals zu empfangen;
eine während der Abbremszeit aufgetretene Ist-Gesamt-Bremsmomentänderung (a-ist) unter Berücksichtigung mindestens eines bereitgestellten Sensorsignals (26) mindestens eines Geschwindigkeitssensors und/oder mindestens eines Verzögerungssensors zu ermitteln oder mittels eines bereitgestellten zweiten Datensignals zu empfangen,
zumindest sofern während der Abbremszeit das Soll-Motor-Bremsmoment (Mm-soll) reduziert und das Soll-Reib-Bremsmoment (Mr-soll) gesteigert wird, eine Abweichung der Ist-Gesamt-Bremsmomentänderung (a-ist) von der Soll-Gesamt-Bremsmomentänderung (a-soll) zu ermitteln, und, sofern die Abweichung ungleich Null ist, den Wichtungsfaktor (16) nach der Abbremszeit unter Berücksichtigung eines Vergleichs der Soll-Gesamt-Bremsmomentänderung (a-soll) mit der Ist-Gesamt-Bremsmomentänderung (a-ist) neufestzulegen, indem der Wichtungsfaktor (16) um ein Produkt aus der ermittelten Abweichung und einem vorgegebenen Glättungsfaktor geändert wird.

2. Steuervorrichtung (10) nach Anspruch 1, wobei die Ansteuereinrichtung (12) zusätzlich dazu ausgelegt ist, ein Minimum (Mm-soll0) aus dem Soll-Gesamt-Bremsmoment (Mges-soll) und einem bereitgestellten oder aus einer bereitgestellten Information (28, 30) ermittelten maximal ausführbaren Kann-Motor-Bremsmoment (Mm-kann, 20) zu ermitteln, und das Soll-Motor-Bremsmoment (Mm-soll) als Produkt des Minimums (Mm-soll0) und des Wichtungsfaktors (16) festzulegen.

3. Steuervorrichtung (10) nach Anspruch 2, wobei die Ansteuereinrichtung (12) zusätzlich dazu ausgelegt ist, das Soll-Reib-Bremsmoment (Mr-soll), sofern das maximal ausführbare Kann-Motor-Bremsmoment (Mm-kann) größer als das Soll-Gesamt-Bremsmoment (Mges-soll) ist, gleich Null, und, sofern das maximal ausführbare Kann-Motor-Bremsmoment (Mm-kann) kleiner als das Soll-Gesamt-Bremsmoment (Mges-soll) ist, als Differenz des Soll-Motor-Bremsmoments (Mm-soll) von dem Soll-Gesamt-Bremsmoment (Mges-soll) festzulegen.

4. Steuervorrichtung (10) nach einem der vorhergehenden Ansprüche, wobei die Ansteuereinrichtung (12) zusätzlich dazu ausgelegt ist, zuerst ein vorläufiges Soll-Motor-Bremsmoment (Mm-soll0) und das Soll-Reib-Bremsmoment (Mr-soll) festzulegen, und anschließend das Soll-Motor-Bremsmoment (Mm-soll) als Produkt des vorläufigen Soll-Motor-Bremsmoments (Mm-soll0) und des Wichtungsfaktors (16) zu berechnen.

5. Steuervorrichtung (10) nach einem der vorhergehenden Ansprüche, wobei mindestens eine Hydraulikkomponente der hydraulisch ausgebildeten weiteren Reibbremsanlage mittels des mindestens einen Reibbremse-Steuersignals (24) ansteuerbar ist.

6. Bremssystems für ein Fahrzeug mit einer Steuervorrichtung (10) nach einem der vorhergehenden Ansprüche.

7. Verfahren zum Betreiben eines rekuperativen Bremssystems eines Fahrzeugs, mit dem Schritt:

Ansteuern mindestens eines Elektromotors des rekuperativen Bremssystems entsprechend einem festgelegten Soll-Motor-Bremsmoment (Mm-soll) und mindestens einer weiteren Reibbremsanlage des rekuperativen Bremssystems entsprechend einem festgelegten Soll-Reib-Bremsmoment (Mr-soll) zumindest zum Verlangsamen des Fahrzeugs während einer Abbremszeit, wobei das Soll-Motor-Bremsmoment (Mm-soll) und das Soll-Reib-Bremsmoment (Mr-soll) zumindest unter Berücksichtigung eines von einem Fahrer mittels einer Betätigung eines Bremsbetätigungselements des Fahrzeugs und/oder von einer Geschwindigkeits-Steuerautomatik des Fahrzeugs vorgegebenen Soll-Gesamt-Bremsmoments (Mges-soll) während der Abbremszeit mehrmals festgelegt werden (S1);
wobei das Soll-Motor-Bremsmoments (Mm-soll) während der Abbremszeit unter zusätzlicher Berücksichtigung eines vorgegebenen Wichtungsfaktors (16) festgelegt wird;

**dadurch gekennzeichnet, dass**
das Verfahren die folgenden Schritte umfasst:

Ermitteln einer während der Abbremszeit aufgetretene Soll-Gesamt-Bremsmomentänderung (a-soll) unter Berücksichtigung des von dem Fahrer und/oder der Geschwindigkeits-Steuerautomatik während der Abbremszeit vorgegebenen Soll-Gesamt-Bremsmoments (Mges-soll) (S2);
Ermitteln einer während der Abbremszeit aufgetretenen Ist-Gesamt-Bremsmomentänderung (a-ist) mittels mindestens eines Geschwindigkeitssensors und/oder mindestens eines Verzögerungssensors (S3); und,
zumindest sofern während der Abbremszeit das Soll-Motor-Bremsmoment (Mm-soll) reduziert und das Soll-Reib-Bremsmoment (Mr-soll) gesteigert wird, Neufestlegen des Wichtungsfaktors (16) nach der Abbremszeit unter Berücksichtigung eines Vergleichs der Soll-Gesamt-Bremsmomentänderung (a-soll) mit der Ist-Gesamt-Bremsmomentänderung (a-ist) (S4), wobei eine Abweichung der Ist-Gesamt-Bremsmomentänderung (a-ist) von der Soll-Gesamt-Bremsmomentänderung (a-soll) ermittelt wird, und, sofern die Abweichung ungleich Null ist, der Wichtungsfaktor (16) um ein Produkt aus der ermittelten Abweichung und einem vorgegebenen Glättungsfaktor geändert wird.

8. Verfahren nach Anspruch 7, wobei das Festlegen des Soll-Motor-Bremsmoments die Schritte umfasst:

Ermitteln eines Minimums (Mm-soll0) aus dem Soll-Gesamt-Bremsmoment (Mges-soll) und einem bereitgestellten oder ermittelten maximal ausführbaren Kann-Motor-Bremsmoment (Mm-kann, 20); und
Festlegen des Soll-Motor-Bremsmoments (Mm-soll) als Produkt des Minimums (Mm-soll0) und des Wichtungsfaktors (16) (S11).

9. Verfahren nach Anspruch 8, wobei, das Soll-Reib-Bremsmoment (Mr-soll), sofern das maximal ausführbare Kann-Motor-Bremsmoment (Mm-kann) größer als das Soll-Gesamt-Bremsmoment (Mges-soll) ist, gleich Null, und, sofern das maximal ausführbare Kann-Motor-Bremsmoment (Mm-kann) kleiner als das Soll-Gesamt-Bremsmoment (Mges-soll) ist, als Differenz des Soll-Motor-Bremsmoments (Mm-soll) von dem Soll-Gesamt-Bremsmoment (Mges-soll) festgelegt wird (S13).

10. Verfahren nach einem der Ansprüche 7 bis 9, wobei zuerst ein vorläufiges Soll-Motor-Bremsmoment (Mm-soll0) und das Soll-Reib-Bremsmoment (Mr-soll) festgelegt werden, und anschließend das Soll-Motor-Bremsmoment (Mm-soll) als Produkt des vorläufigen Soll-Motor-Bremsmoments (Mm-soll0) und des Wichtungsfaktors (16) berechnet wird.

## Claims

1. Control device (10) for a recuperative brake system of a vehicle, having:

an actuation device (12) by means of which at least one electric motor of the recuperative brake system and at least one further friction brake system of the recuperative brake system can be actuated, with the result that the vehicle can be at least slowed down during a braking time, wherein a setpoint engine braking torque (Mm-setp) which is to be applied by means of the at least one electric motor and a setpoint friction braking torque (Mr-setp) which is to be applied by means of the at least one further friction brake system can be defined repeatedly during the braking time at least taking into account a predefinition signal (14) relating to a setpoint total braking torque (Mges-setp) which can be predefined by a driver by means of activation of a brake activation element of the vehicle and/or of an automatic speed control system of the vehicle, and at least one motor control signal (22) which corresponds to the defined setpoint motor braking torque (Mm-setp) can be output to the at least one electric motor, and at least one friction brake control signal (24) corresponding to the defined setpoint friction braking torque (Mr-setp) can be output to the at least one friction brake system, repeatedly during the braking time;
wherein the actuation device (12) is additionally configured
to define the setpoint motor braking torque (Mm-setp) during the braking time while additionally taking into account a predefined weighting factor (16);

**characterized in that**
the actuation device (12) is additionally configured:

to determine a setpoint total braking torque change (a-setp), which has occurred during the braking time, while taking into account the predefinition signal (14) or to receive said setpoint total braking torque change (a-setp) by means of a first data signal which is made available;
to determine an actual total braking torque change (a-act), which has occurred during the braking time, while taking into account at least one sensor signal (26) which is made available, of at least one speed sensor and/or at least one deceleration sensor or to receive said actual total braking torque change (a-act) by means of a second data signal which is made available,
to determine a deviation of the actual total braking torque change (a-act) from the setpoint total braking torque change (a-setp) at least in so far as the setpoint motor braking torque (Mm-setp) is reduced and the setpoint friction braking torque (Mr-setp) is increased during the braking time, in so far as the deviation is unequal to zero, to re-define the weighting factor (16) after the braking time by taking into account a comparison of the setpoint total braking torque change (a-setp) with the actual total braking torque change (a-act) **in that** the weighting factor (16) is changed by a product of the determined deviation and a predefined smoothing factor.

2. Control device (10) according to Claim 1, wherein the actuation device (12) is additionally configured to determine a minimum (Mm-setp0) from the setpoint total braking torque (Mges-setp) and a maximum executable possible motor braking torque (Mm-poss, 20) which is made available or is determined from information (28, 30) which is made available, and to define the setpoint motor braking torque (Mm-setp) as a product of the minimum (Mm-setp0) and the weighting factor (16).

3. Control device (10) according to Claim 2, wherein the actuation device (12) is additionally configured, in so far as the maximum executable possible motor braking torque (Mm-poss) is greater than the setpoint total braking torque (Mges-setp), to set the setpoint friction braking torque (Mr-setp) to be equal to zero, and, in so far as the maximum executable possible motor braking torque (Mm-poss) is smaller than the setpoint total braking torque (Mges-setp), to define said setpoint friction braking torque (Mr-setp) as the difference of the setpoint motor braking torque (Mm-setp) from the setpoint total braking torque (Mges-setp).

4. Control device (10) according to one of the preceding claims, wherein the actuation device (12) is additionally configured firstly to define a provisional setpoint motor braking torque (Mm-setp0) and the setpoint friction braking torque (Mr-setp), and subsequently to calculate the setpoint motor braking torque (Mm-setp) as a product of the provisional setpoint motor braking torque (Mm-setp0) and of the weighting factor (16).

5. Control device (10) according to one of the preceding claims, wherein at least one hydraulic component of the further friction brake system which is of hydraulic design can be actuated by means of the at least one friction brake control signal (24).

6. Brake system for a vehicle having a control device (10) according to one of the preceding claims.

7. Method for operating a recuperative brake system of a vehicle, having the step:

actuating at least one electric motor of the recuperative brake system according to a defined setpoint motor braking torque (Mm-setp) and at least one further friction brake system of the recuperative brake system according to a defined setpoint friction braking torque (Mr-setp) at least in order to slow down the vehicle during a braking time, wherein the setpoint motor braking torque (Mm-setp) and the setpoint friction braking torque (Mr-setp) are defined repeatedly during the braking time at least taking into account a setpoint total braking torque (Mges-setp) which is predefined by a driver by means of activation of a brake activation element of the vehicle and/or of an automatic speed control system of the vehicle (S1);
wherein the setpoint motor braking torque (Mm-setp) is defined during the braking time while additionally taking into account a predefined weighting factor (16);

**characterized in that**

the method comprises the following steps:

determining a setpoint total braking torque change (a-setp) which has occurred during the braking time, taking into account the setpoint total braking torque (Mges-setp) predefined by the driver and/or the automatic speed control system during the braking time (S2);

determining an actual total braking torque change (a-act) which has occurred during the braking time, by means of at least one speed sensor and/or at least one deceleration sensor (S3); and

at least in so far as the setpoint motor braking torque (Mm-setp) is reduced during the braking time and the setpoint friction braking torque (Mr-setp) is increased, re-defining the weighting factor (16) after the braking time while taking into account a comparison of the setpoint total braking torque change (a-setp) with the actual total braking torque change (a-act) (S4), wherein a deviation of the actual total braking torque change (a-act) from the setpoint total braking torque change (a-setp) is determined, and, in so far as the deviation is unequal to zero, the weighting factor (16) is changed by a product of the determined deviation and a predefined smoothing factor.

**8.** Method according to Claim 7, wherein the definition of the setpoint motor braking torque comprises the steps:

determining a minimum (Mm-setp0) of the setpoint total braking torque (Mges-setp) and a maximum executable possible motor braking torque (Mm-poss, 20) which is made available or determined; and

defining the setpoint motor braking torque (Mm-setp) as a product of the minimum (Mm-setp0) and of the weighting factor (16) (S11).

**9.** Method according to Claim 8, wherein the setpoint friction braking torque (Mr-setp), in so far as the maximum executable possible motor braking torque (Mm-poss) is greater than the setpoint total braking torque (Mges-setp), is set to be equal to zero, and, in so far as the maximum executable possible motor braking torque (Mm-poss) is smaller than the setpoint total braking torque (Mges-setp), is defined as the difference of the setpoint motor braking torque (Mm-setp) from the setpoint total braking torque (Mges-setp) (S13).

**10.** Method according to one of Claims 7 to 9, wherein firstly a provisional setpoint motor braking torque (Mm-setp0) and the setpoint friction braking torque (Mr-setp) are defined, and subsequently the setpoint motor braking torque (Mm-setp) is calculated as a product of the provisional setpoint motor braking torque (Mm-setp0) and the weighting factor (16).

**Revendications**

**1.** Dispositif de commande (10) pour un système de freinage récupératif d'un véhicule, comportant :

un dispositif d'attaque (12) au moyen duquel au moins un moteur électrique du système de freinage récupératif et au moins un autre système de freinage à friction du système de freinage récupératif peuvent être attaqués de manière à ce que le véhicule puisse au moins être ralenti pendant le temps de freinage, dans lequel un couple de freinage de moteur nominal (Mm-soll) devant être exercé au moyen de l'au moins un moteur électrique et un couple de freinage à friction nominal (Mr-soll) devant être exercé au moyen de l'au moins un autre système de freinage à friction peuvent être établis plusieurs fois pendant le temps de freinage en tenant au moins compte d'un signal de consigne (14) concernant un couple de freinage total nominal (Mges-soll) pouvant être prédéfini par un conducteur au moyen d'un actionnement d'un élément d'actionnement de frein du véhicule et/ou par un système automatique de commande de vitesse du véhicule, et au moins un signal de commande de moteur (22) correspondant au couple de freinage de moteur nominal (Mm-soll) établi peut être délivré plusieurs fois audit au moins un moteur électrique et au moins un signal de commande de freinage à friction (24) correspondant au couple de freinage de friction nominal (Mr-soll) établi peut être délivré plusieurs fois à l'au moins un système de freinage à friction pendant le temps de freinage ;

dans lequel le dispositif d'attaque (12) est en outre conçu pour

établir le couple de freinage de moteur nominal (Mm-soll) pendant le temps de freinage en tenant en outre compte d'un facteur de pondération (16) prédéfini ;

**caractérisé en ce que**

le dispositif d'attaque (12) est en outre conçu pour :

déterminer ou recevoir au moyen d'un premier signal de données fourni une variation du couple de freinage total nominal (a-soll) se produisant pendant le temps de freinage en tenant compte du signal de consigne (14) ;

obtenir ou recevoir au moyen d'un second signal de données fourni une variation totale du couple de freinage réel se produisant pendant le temps de freinage (a-ist) en tenant compte d'au moins un signal de capteur fourni (26) d'au moins un capteur de vitesse et/ou d'au moins un capteur de décélération ;

au moins déterminer, dans le cas où, pendant le temps de freinage, le couple de freinage de moteur nominal (Mm-soll) diminue et où le couple de freinage nominal de friction (Mr-soll) augmente, un écart entre la variation totale du couple de freinage réel (a-ist) et la variation totale du couple de freinage nominal (a-soll) et, dans le cas où l'écart est différent de zéro, établir à nouveau le facteur de pondération (16) après le temps de freinage en tenant compte d'une comparaison entre la variation totale du couple de freinage nominal (a-soll) et la variation totale du couple de freinage réel (a-ist) en modifiant le facteur de pondération (16) d'une valeur égale à un produit entre l'écart déterminé et un facteur de lissage prédéfini.

2. Dispositif de commande (10) selon la revendication 1, dans lequel le dispositif d'attaque (12) est en outre conçu pour déterminer un minimum (Mm-soll0) à partir du couple de freinage total nominal (Mges-soll) et d'un couple de freinage de moteur possible (Mm-kann, 20) maximal pouvant être exercé ou déterminé à partir d'une information fournie (28, 30) et pour établir le couple de freinage de moteur nominal (Mm-soll) sous la forme d'un produit du minimum (Mm-soll0) par le facteur de pondération (16).

3. Dispositif de commande (10) selon la revendication 2, dans lequel le dispositif d'attaque (12) est en outre conçu pour établir le couple de freinage à friction nominal (Mr-soll), dans le cas où le couple de freinage de moteur possible (Mm-kann) maximal pouvant être exercé est supérieur au couple de freinage total nominal (Mges-soll), à une valeur nulle et, dans le cas où le couple de freinage de moteur possible (Mm-kann) maximal pouvant être exercé est inférieur au couple de freinage total nominal (Mges-soll), à la différence entre le couple de freinage de moteur nominal (Mm-soll) et le couple de freinage total nominal (Mges-soll).

4. Dispositif de commande (10) selon l'une quelconque des revendications précédentes, dans lequel le dispositif d'attaque (12) est en outre conçu pour établir en premier lieu un couple de freinage de moteur nominal provisoire (Mm-soll0) et le couple de freinage à friction nominal (Mr-soll), puis pour calculer le couple de freinage de moteur nominal (Mm-soll) sous la forme d'un produit du couple de freinage de moteur nominal provisoire (Mm-soll0) par le facteur de pondération (16).

5. Dispositif de commande (10) selon l'une quelconque des revendications précédentes, dans lequel au moins un composant hydraulique de l'autre système de freinage à friction réalisé de manière hydraulique peut être attaqué au moyen d'au moins un signal de commande de freinage à friction (24).

6. Système de freinage destiné à un véhicule comportant un dispositif de commande (10) selon l'une quelconque des revendications précédentes.

7. Procédé de mise en fonctionnement un système de freinage récupératif d'un véhicule, comportant l'étape consistant à :

attaquer au moins un moteur électrique du système de freinage récupératif d'une manière qui correspond à un couple de freinage de moteur nominal (Mm-soll) établi et au moins un autre système de freinage à friction du système de freinage récupératif d'une manière qui correspond à un couple de freinage à friction nominal (Mr-soll) établi pour au moins ralentir le véhicule pendant un temps de freinage, dans lequel le couple de freinage de moteur nominal (Mm-soll) et le couple de freinage à friction nominal (Mr-soll) sont établis plusieurs fois pendant le temps de freinage en tenant au moins compte d'un couple de freinage total nominal (Mges-soll) prédéfini par un conducteur au moyen d'un actionnement d'un élément d'actionnement de frein du véhicule et/ou par un système automatique de commande de vitesse du véhicule (S1) ;
dans lequel le couple de freinage de moteur nominal (Mm-soll) est établi pendant le temps de freinage en tenant en outre compte d'un facteur de pondération (16) prédéfini ;

**caractérisé en ce que**
le procédé comprend les étapes consistant à :

déterminer une variation totale du couple de freinage nominal (a-soll) se produisant pendant le temps de freinage en tenant compte du couple de freinage total nominal (Mges-soll) prédéfini par le conducteur et/ou le système automatique de commande de vitesse (S2) ;
déterminer une variation totale du couple de freinage réel (a-ist) se produisant pendant le temps de freinage au moyen d'au moins un capteur de vitesse et/ou d'au moins un capteur de décélération (S3) ; et
au moins établir à nouveau le facteur de pondération (16) dans le cas où, pendant le temps de freinage, le couple de freinage de moteur nominal (Mm-soll) diminue et où le couple de freinage à friction nominal (Mr-soll) augmente, après le temps de freinage, en tenant compte d'une comparaison entre la variation totale du couple de freinage nominal (a-soll) et la variation totale du couple de freinage réel (a-ist) (S4), dans lequel un écart entre la variation totale du couple de freinage réel (a-ist) et la variation totale du couple de freinage nominal (a-soll) est déterminé et, dans le cas où l'écart est différent de zéro, le facteur de pondération (16) est modifié d'une valeur égale à un produit de l'écart déterminé par un facteur de lissage prédéfini.

8. Procédé selon la revendication 7, dans lequel l'établissement du couple de freinage de moteur nominal comprend les étapes consistant à :

    déterminer un minimum (Mm-soll0) à partir du couple de freinage total nominal (Mges-soll) et d'un couple de freinage de moteur possible (Mm-kann, 20) maximal pouvant être exercé ayant été fourni ou déterminé ; et
    établir le couple de freinage de moteur nominal (Mm-soll) sous la forme d'un produit du minimum (Mm-soll0) par le facteur de pondération (16) (S11).

9. Procédé selon la revendication 8, dans lequel le couple de freinage à friction nominal (Mr-soll) est établi à une valeur égale à zéro lorsque le couple de freinage de moteur possible (Mm-kann) maximal pouvant être exercé est supérieur au couple de freinage total nominal (Mges-soll), et est établi à la différence entre le couple de freinage de moteur nominal (Mm-soll) et le couple de freinage total nominal (Mges-soll) lorsque le couple de freinage de moteur possible (Mm-kann) maximal pouvant être exercé est inférieur au couple de freinage total nominal (Mges-soll) (S13).

10. Procédé selon l'une quelconque des revendications 7 à 9, dans lequel un couple de freinage de moteur nominal provisoire (Mm-soll0) et le couple de freinage à friction nominal (Mr-soll) sont tout d'abord établis, puis le couple de freinage de moteur nominal (Mm-soll) est calculé sous la forme d'un produit du couple de freinage de moteur nominal provisoire (Mm-soll0) par le facteur de pondération (16).

Fig. 1

Fig. 2a

Fig. 2b

Fig. 2c

Fig. 2d

Fig. 3

Fig. 4

EP 2 743 151 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102010040854 A1
- FR 2974342 A1